# EUROPÄISCHE PATENTSCHRIFT

(11) **EP 3 017 604 B1**
(45) Veröffentlichungstag und Bekanntmachung des Hinweises auf die Patenterteilung: **02.05.2018**
(21) Anmeldenummer: 14735955.8
(22) Anmeldetag: 03.07.2014
(51) Int. Cl.: H04N 21/258, H04N 21/239, H04N 21/426, H04N 21/61, H04N 21/6543

(54) **VERFAHREN ZUR AUTHENTIFIZIERUNG**
METHOD FOR AUTHENTICATION
METHODE D'AUTHENTIFICATION

(30) Priorität: 04.07.2013 DE 102013107047
(43) Veröffentlichungstag der Anmeldung: 11.05.2016
(73) Patentinhaber: Deutsche Telekom AG, 53113 Bonn (DE)
(72) Erfinder: PFEFFER, Uwe, 64291 Darmstadt (DE)
(74) Vertreter: 2K Patentanwälte Blasberg Kewitz & Reichel
(86) Internationale Anmeldenummer: PCT/EP2014/064251
(87) Internationale Veröffentlichungsnummer: WO 2015/001052

(56) Entgegenhaltungen:
- WO-A2-2007/065160
- WO-A2-2012/001364
- US-A1- 2007 022 469
- US-A1- 2007 097 860
- US-B1- 7 549 160

## Beschreibung

Die Erfindung betrifft ein Verfahren und eine Vorrichtung zur Authentifizierung einer Set-Top-Box, die durch ein lokales Netzwerk mit einem Internet Access Device verbunden ist, wobei das Internet Access Device über ein Netzelement den Zugang zum Internet bereitstellt, wobei das Internet Access Device sich mit Hilfe eines Accounts authentifiziert, um einen Zugang zum Internet zu erlangen, mit einem Plattform Client Bootmanager, der für die Authentifizierung der Set-Top-Box verantwortlich ist, und der auf der Basis des Accounts die Authentifizierung der Set-Top-Box durchführt,

### Gebiet der Erfindung

Die Erfindung betrifft ein Verfahren zur Authentifizierung im IPTV-Bereich (Internet Protocol Television). Mit Internet Protocol Television (IPTV) wird allgemein der Übertragungsweg Internet für Fernsehprogramme und Filme bezeichnet im Gegensatz zu klassischem Rundfunk, Kabel oder Satellit. IPTV ist ein Gattungsbegriff, der in sehr vielen unterschiedlichen Ausprägungen anzutreffen ist. Die unterschiedlichen Ausprägungen reichen vom einfachen IPTV über Computer oder Handy bis hin zu speziellen Endgeräten, bei denen der Benutzer gar nicht bemerkt, dass er das Internet dazu nutzt, weil er über den Fernseher eine Set-Top-Box (STB) bedient, wie etwa bei Apple TV oder T-Home Media Receiver. Im Folgenden wird auf die Konfiguration mit T-Home Media Receivern eingegangen. Als Set-Top-Box wird in der Unterhaltungselektronik ein Gerät bezeichnet, das an ein anderes - meist einen Fernseher - angeschlossen wird und damit dem Benutzer zusätzliche Nutzungsmöglichkeiten bietet. Im vorliegenden Fall wird die Programmauswahl erweitert, indem Informationen aus dem Internet, insbesondere Filme und weitere TV-Kanäle eingespielt werden.

Die Druckschriften US 2007/097860 A1, US 2007/022469 A1 und WO 2007/065160 A2 offenbaren Verfahren zur Steuerung des Zugriffs von Set-Top-Boxen.

Die Architektur heutiger Authentifizierungssysteme im IPTV Umfeld unterstützt nomadische Accounts, d.h. die Set-Top-Boxen (STBs) des Nutzers können mit dem Internet Access Device (IAD) alternativ an einem anderen DSL-Anschluss (desselben Anbieters) betrieben werden. Als IAD können z.B. klassische Router betrachtet werden, die den Zugang zum Internet bzw. zum DSL Netzwerk erlauben. Diese Router können mit und ohne Modem ausgestattet sein, das für das DSL, VDSL, ADSL Netzwerk notwendig ist. In der Regel weist der Router eine Schnittstelle ins DSL Netzwerk auf und eine oder mehrere in das LAN per WLAN oder Ethernet.

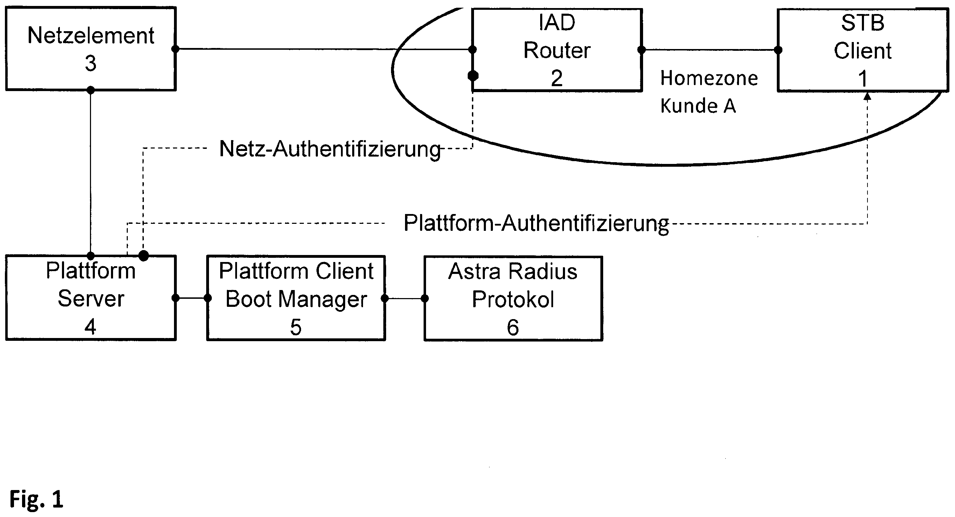

Die Figur 1 zeigt die Komponenten beim Aufbau einer Verbindung.
Die Set-Top-Box (STB) sitzt als Client 1 nach dem Internet Access Device (IAD) vor dem Ausgabegerät (TV/Display).

Das Internet Access Device (IAD) 2 ist über ein Netzwerk mit dem Client 1 im lokalen Netzwerk verbunden. Im IPTV Umfeld ist der IAD ein Router, der nach dem DSL- Splitter eingesetzt wird und den Internet Zugang aufbaut. Der Router speichert die Kundenkennung und Passwort für die Authentifizierung beim Internet Service Provider via Radius-Protokoll. Im Folgenden wird die Kundenkennung als TOID bezeichnet (T-Online Identifier, eindeutige Kennung eines Internet Access Kunden der Deutschen Telekom AG). Zu dieser Kundenkennung sind ebenfalls in den Backend-Server des IPTV Produktes die Berechtigungen des Kunden (gebuchte Kanäle, et.al.) hinterlegt.

Über ein Netzelement 3, hier DSLAM, andere sind auch denkbar, wird die Telefon-Leitung jedes Haushalts physikalisch (über eine Doppelkupferader) an einen DSLAM-Port angeschlossen. Ein DSL-Zugangskonzentrator (engl. "Digital Subscriber Line Access Multiplexer "), kurz DSLAM, ist ein Teil der für den Betrieb von DSL benötigten Infrastruktur. DSLAMs stehen an einem Ort, an dem Teilnehmeranschlussleitungen zusammenlaufen. Andere Technologien, wie Glasfaser bis zum Kunden, sind natürlich ebenfalls denkbar.

Die Server Plattform 4 mit einem entsprechenden Server speichert u.a. die Daten der Kundenkennung und der STB-Clients. Der Plattform-Server delegiert den Bootvorgang des Clients an den Plattform Client Boot Manager 5.

Der IPTV-Plattform Client Bootmanager 5
- stellt eine Plattform-Authentifizierung auf Basis der Netz-Authentifizierung sicher, dazu bedient er sich der Statusmeldung des Astra Servers 6. die Netz-Authentifizierung erfolgt in der Regel über den Router 2, indem die einzelnen Informationen für die Authentifizierung abgelegt sind. Der Router zertifiziert sich in der Regel über den Astra Server, der das Radiusprotokoll verwendet, dass ein bekanntes Standardprotokoll ist, um eine Authentifizierung in einer heterogenen Umgebung durchzuführen. Die Details des Radiusprotokolls sind dem entsprechenden Standard zu entnehmen.
- Der Client Bootmanager bekommt vom Astra-Server neben dem Session Status auch den verwendeten DSLAM-Port(3).

Es wird festgestellt, dass an der STB auf der Plattform in einem anderen Haushalt laufen und speichert diese Information.

Nach der Anmeldung entsprechen im Haushalt vom Kunden A die Nutzungsmöglichkeiten (Pay-TV-Channels) seinen IPTV-Buchungen.

Durch den Tausch der Internetzugangskennung entstehen illegale Nutzungsmöglichkeiten, wie im Folgenden beschrieben wird.

Im Weiteren wird angenommen, dass ein Kunde B mehr Nutzungsmöglichkeiten als ein Kunde A hat (z.B. weitere Pay-TV Buchungen). Ein Missbrauch liegt darin, dass im Haushalt des Kunden A die Nutzungsmöglichkeiten des Kunden B verwendet werden sollen.

Um dies zu erreichen sind folgende Schritte notwendig.
Schritt 1) Im Haushalt des Kunden A wird das IAD mit der Internet Zugangskennung von Kunden B konfiguriert (TOID, Passwort, ...).
Schritt 2) Reboot der STB, dadurch wird durch den Plattform Client Boot Manager 5 die STB 1 des Kunden A dem Kunden B zugeordnet und die entsprechende Berechtigungen freigegeben.

Kommentar: bis zu diesem Schritt liegt grundsätzlich noch kein Missbrauch vor.
Schritt 3) Im Haushalt des Kunden A wird nun das IAD mit der Zugangskennung von Kunde A konfiguriert - Das IAD ist nun wieder in den ursprünglichen Zustand zurück gesetzt worden(Internet Zugangskennung ist nur unique gleichzeitig nutzbar).
Schritt 4) STB im Haushalt des Kunden A wird nicht gebootet, daher verbeiben die Nutzungsmöglichkeiten des Kunden B.
Schritt 5) Kunde B möchte in seinem eigenen Haushalt ebenfalls das IPTV nutzen.
   Dazu muss er das IAD im Haushalt des Kunden B mit den Internet Zugangskennungen von B konfigurieren und starten
Schritt 6) und seine STB neu booten.

In den zwei Haushalten konnten gleichzeitig die Berechtigungen eines Kunden genutzt werden, da diese nur beim Start abgefragt wurden und von den IAD Daten abhängen.

### Überblick über die Erfindung:

Aufgabe der vorliegenden Erfindung ist es zu verhindern, dass zwei Set-Top-Boxen gleichzeitig arbeiten und dabei die gleiche Kennung verwenden, um sich so in einer unerlaubten Weise einen Zugang zu erschleichen.
Gelöst wird diese Aufgabe durch eine Erfindung mit den Merkmalen der unabhängigen Ansprüche, insbesondere wird die Erfindung gelöst durch ein Verfahren, wie es im Folgenden beschrieben wird.

Die Erfindung umfasst ein Verfahren zur Authentifizierung einer Set-Top-Box. Die Set-Top-Box ist durch ein lokales Netzwerk mit einem Internet Access Device verbunden. In der Regel ist die Set-Top-Box über ein Ethernet oder WLAN mit dem Internet Access Device verbunden. Die Set-Top-Box lädt dabei in der Regel bestimmte Videodaten aus dem Internet über das lokale Netzwerk herunter, um Sie dann auf einem Fernseher anzuzeigen. Zur Steuerung des Zugriffs der Set-Top-Box auf Inhalte, die abzuspielen sind, werden die Authentifizierungsdaten genommen, die das Internet Access Device bereitstellt. Das Internet Access Device stellt über ein Netzelement den Zugang zum Internet bereit, wobei sich das Internet Access Device mit Hilfe eines Accounts authentifiziert, um einen Zugang zum Internet zu erlangen. Der Account wird in der Regel mit einer Zugangskennung und einem Passwort verknüpft. Hierbei ist zu beachten, dass die Account Verwaltung in der Regel zentral erfolgt und mithilfe von Protokollen die Weiterleitung der Authentifizierungsdaten zu den einzelnen Komponenten erfolgt, die für die Authentifizierung zuständig sind. Ein solches Protokoll ist das Radiusprotokoll. Das Internet Access Device ist in der Regel über ein Netzelement, das vorzugsweise als DSLAM Netzgerät ausgebildet ist, verbunden. Über die so hergestellte Internetverbindung verbindet sich die Set-Top-Box für ihren Bootvorgang mit einem Plattform Client Bootmanager, der für die Authentifizierung der Set-Top-Box verantwortlich ist, und der auf der Basis des Accounts die Authentifizierung der Set-Top-Box durchführt. Ferner ist der Client Manager in der bevorzugten Ausführungsform für den Bootvorgang der Set-Top-Box zuständig und stellt ebenfalls Daten und Informationen für den Bootvorgang bereit. Bei der Kontaktierung der Set-Top-Box mit dem Plattform Client Boot Manager werden folgende Schritte durchgeführt:
- Speichern mit dem Account eine eindeutige Information, aus der die Identität der Set-Top-Box ersichtlich ist;
- Überprüfen der Set-Top-Box während des Betriebs, anhand der Identität, ob mehrere Set-Top-Boxen den gleichen Account verwenden, und wenn dies der Fall ist, Verhindern der Funktion der Set-Top-Box.

In der bevorzugten Ausführungsform sind die eindeutigen Informationen eine Seriennummer oder eine Netzwerk-Identifikation der Set-Top-Box. Eine solche Identifikation können z.B. Netzwerk Adressen sein oder Macadressen oder speziell für den Zweck gebildete Identifikationen, die eindeutig sind und in der Set-Top-Box abgespeichert sind. Zusätzlich kann noch eine Portnummer, die eindeutig ist, verwendet werden um eine eindeutige Zuordnung sicherzustellen. Die Portnummer ist vorzugsweise eine DSLAM Port- Nummer. Es handelt sich somit um die physikalische Schnittstelle des Internet Access Device mit dem Netzelement. In der Regel erfolgt eine Authentifizierung über einen Plattform Server, wobei der Plattform Server speziell für die Set-Top-Boxen zuständig ist. In Regel gibt es unterschiedliche Plattform Server, die alle für unterschiedliche Dienste im Netzwerk bereitstehen, um unterschiedliche Leistungen und Services den Geräten im Netz bereitzustellen. Für die Authentifizierung zur Nutzung der Leistung wird in der Regel über das Radius Protokoll auf eine zentrale Instanz zugegriffen, die die Account Daten verwaltet.

Sollte zum Beispiel durch den Plattform Client Bootmanager oder den Plattform Server festgestellt werden, dass mehrere Set-Top-Boxen mit einer unterschiedlichen eindeutigen Information vorhanden sind, die den gleichen Account verwenden, so wird überprüft, ob diese den selben DSLAM -Port verwenden, und falls diese nicht denselben DSLAM Port verwenden, so erfolgt eine Verhinderung der Funktion der Set-Top-Box. Die Verhinderung der Funktion kann in unterschiedlicher Form erfolgen, entweder wird ein Zugriff auf die Daten vermieden oder die Funktionalität der Set-Top-Box wird eingeschränkt, oder die Set-Top-Box wird abgeschaltet bzw. neu gestartet.
Es ist auch denkbar, dass unabhängig vom DSLAM Port eine Einschränkung der Funktion der Set-Top-Box erfolgt, wenn festgestellt wird, dass sich zwei unterschiedliche Set-Top-Boxen über den gleichen Account Zugriff auf Informationen verschaffen.

In einer bevorzugten Ausführungsform speichert der Plattform Client Bootmanager beim Booten der Set-Top-Box die eindeutigen Informationen, und ebenfalls anhand der eindeutigen Information wird überprüft, ob mehrere Set-Top-Boxen den Account verwenden, um dann die Set-Top-Boxen, die den gleichen Account verwenden erneut zu booten. Hierbei werden die eindeutigen Informationen entweder lokal auf dem Plattform Client Boot Manager und/oder auf dem Plattformserver gespeichert oder über das Radiusprotokoll an den Astra Server gesendet, um dort abgespeichert zu werden.

Das Abspeichern erfolgt im Zusammenhang mit den Account Informationen.

In einer bevorzugten Ausführungsform erlangt der Plattform Client Bootmanager Account Informationen über ein Radius Protokoll von einem zentralen Server, und wobei von diesem Server ebenfalls eine DSLAM Portnummer erlangt wird, an dem das Internet Access Device angeschlossen ist. Somit ist eindeutig zu erkennen, ob mehrere Set-Top-Boxen mit dem gleichen Account bzw. Anmeldedaten über unterschiedliche DSLAM Ports mit dem Internet verbunden sind. Wenn dies der Fall ist, ist davon auszugehen, dass eine illegale Nutzung vorliegt.

Ein weiterer Teil der Erfindung ist im Wesentlichen ein System, dass das oben genannte Verfahren umsetzt. In der bevorzugten Ausführungsform handelt es sich dabei um ein System umfassend einen Plattform Manager und/oder einen Plattform Server und/oder die Kombination mit einem Astra Radius Protokoll Server.

Im einzelnen handelt es sich um ein System zur Authentifizierung einer Set-Top-Box, insbesondere ein Plattform Client Bootmanager (5), der mit einer Set-Top-Box über ein Netzwerk verbunden ist, wobei die Set-Top-Box (1) über ein lokales Netzwerk mit einem Internet Access Device (2)verbunden ist, wobei das Internet Access Device (1) über ein Netzelement (3) den Zugang zum Internet bereitstellt, wobei das Internet Access Device sich mit Hilfe eines Accounts authentifiziert, um einen Zugang zum Internet zu erlangen,
gekennzeichnet durch
- Mittel zum Empfangen einer Authentifizierungsanfrage von der Set-Top-Box; bei diesen Mitteln handelt es sich in der Regel um einen Prozessor und Netzwerkschnittstellen. In der Regel handelt sich um bekannte Server, die durch Software entsprechend ausgebildet sind.
- Mittel zum Erlangen einer eindeutigen Identität der Set-Top-Box; bei diesen Mitteln handelt es sich in der Regel um eine Schnittstelle, die in der Lage ist, die von der Set-Top-Box übertragenen Informationen zu speichern. Die gespeicherten Informationen werden dann weiter verarbeitet. Das Erlangen der Identität wird in der Regel ebenfalls durch eine Prozessoreinheit vorgenommen.
- Speichereinheit zum Speichern mit dem Account einer eindeutigen Information, aus der die Identität der Set-Top-Box ersichtlich ist; hierbei handelt es sich in der Regel um Speichersysteme, Festplatten, Flash Speicher.
- Mittel zum Überprüfen der Set-Top-Box während des Betriebs anhand der Identität, ob mehrere Set-Top-Boxen den gleichen Account verwenden, und wenn dies der Fall ist, Mittel zum Verhindern der Funktion der Set-Top-Box. Bei diesem Mittel handelt es sich um einen Prozessor, der in einem Serversystem von Software gesteuert ist. Das Serversystem ist in der Regel ein bekanntes System mit bekannten Prozessoren, auf denen ein Betriebssystem wie Windows oder Linux/Unix oder Solaris läuft.

Wie bereits oben ausgeführt wurde sind die eindeutigen Informationen eine Seriennummer oder eine Netzwerk-Identifikation der Set-Top-Box und/ oder eine Portnummer eines Anschlusses an dem Netzelement, wobei die Portnummer vorzugsweise eine DSLAM Port- Nummer ist.

Die Prozess Einheit ist ebenfalls ausgestaltet, um anhand der Daten, die vorzugsweise in der Datenbank abgelegt sind, festzustellen, dass mehrere Set-Top-Boxen mit einer unterschiedlichen eindeutigen Information vorhanden sind, die den gleichen Account verwenden, um dann mit Hilfe des Prozessors zu überprüfen, ob diese den selben DSLAM -Port verwenden, und falls diese nicht denselben DSLAM Port verwenden, so erfolgt eine Verhinderung der Funktion der Set-Top-Box.

Der Plattform Client Boot Manager ist ausgebildet, um ein Speicherabbild oder Konfigurationen für die Set-Top-Box bereitzustellen, die dann bei einem Booten der Set-Top-Box geladen werden, um die Set-Top-Box zu konfigurieren. Die Set-Top-Box kann somit ein entferntes booten unterstützen, bei dem die tatsächlichen Konfigurationsdaten nicht auf der Set-Top-Box abgelegt sind, sondern auf dem Plattform Client Boot Manager. Während dieses Bootprozesses, werden eindeutige Informationen ausgetauscht, die dann lokal in Verbindung mit dem Account gespeichert werden. Anhand der eindeutigen Information wird durch den Prozessor überprüft, ob mehrere Set-Top-Boxen den Account verwenden, um dann die Set-Top-Boxen, die den gleichen Account verwenden erneut zu booten.

Das System umfasst eine Netzwerkschnittstelle und ist konfiguriert durch entsprechende Software Schnittstellen, um Account Informationen über ein Radius Protokoll von einem zentralen Server zu erlangen, und wobei von diesem Server ebenfalls eine DSLAM Portnummer erlangt wird, an dem das Internet Access Device angeschlossen ist.

Die Erfindung verhindert hierdurch den Missbrauch, stellt sicher, dass die bestehenden Einsatzszenarien am IAD (z.B. Tausch der Internetzugangskennung ["nomadische Accounts"]) erhalten bleiben.

### Figuren Beschreibung

Die Figur 1 zeigt eine Netzwerkumgebung in der eine Set-Top-Box angeordnet ist, die über das Internet mit weiteren Komponenten im Internet verbunden ist.

### Beschreibung der Ausführungsform:

Die Figur 1 zeigt eine Set-Top-Box 1, die in einem Heim Netzwerk eines Kunden A (Home Zone) über ein Netzwerk mit einem Internet Access Device 2 verbunden ist. Dieses Internet Access Device ist in der Regel ein Router, der über einen entsprechenden Modus mit einem Netzwerkelement 3 verbunden ist. Bei diesem Modus handelt es sich um DSL, VDSL oder andere Zugangstechnologien, wie sie benötigt werden um eine Wohnung, einen Betrieb mit dem Netzwerk eines Telekom Providers zu verbinden. Der Router nimmt eine Netz Authentifizierung an einem Plattform Server 4 vor. Über diesen Plattform Server 4 wird ebenfalls mithilfe des Plattform Client Bootmanager die Set-Top-Box authentifiziert. Hierbei greift der Plattform Manager 5 über das Astra Radiusprotokoll auf den entsprechenden Radius Server 6 zu, um die Authentifizierungsdaten zu überprüfen. Hierbei wird auf einen Account zugegriffen, der in der Regel zentral verwaltet wird.

Das in der Einleitung beschriebene Verfahren wird in Schritt 6 abgewandelt, indem die Set-Top-Box und/oder der Plattform Client Bootmanager entsprechend angepasst werden. Grundsätzlich reicht es, wenn der Plattform Client Boot Manger entsprechend angepasst wird, indem er die Identifikation erlangt und diese zusätzlich mit Informationen über den Account und gegebenenfalls die DSLAM Port Nummer abspeichert. In einer alternativen Ausführungsform ist es natürlich denkbar, dass die DSLAM Portnummer im Falle des Finden eines identischen Accounts, der von einer anderen Set-Top-Box verwendet wird, vom Radius Server Astra abgefragt wird.

Schritt 6) Während des STB Bootvorgangs zeigt der Plattform Client Boot Manager (5) bei der vorliegenden Erfindung ein anderes Verhalten
a. Während jedes Bootvorgangs speichert der Plattform Client Bootmanager 5 die Kombination Netz-Element DSLAM-Port, Account und STB(Settopbox)-Identifikation zusammen ab. Maßgeblich ist, dass eine eindeutige ID der Set-Top-Box genutzt wird oder zum Beispiel eine eindeutige Kennzeichnung des DSLAM Ports. Anhand der eindeutigen Kennzeichnungen, die Hardware spezifisch sind, ist es möglich zu erkennen, ob auf der Basis der gleichen Set-Top-Box an einem anderen DSLAM Port eine Set-Top-Box betrieben wird. Es bedarf somit einer Speicherung der Informationen des Accounts und einer eindeutigen Hardwareerkennung, die es ermöglicht, Duplikate der Verwendung des Accounts festzustellen.
b. Während jedes Bootvorgangs überprüft der Plattform Client Boot Manager 5 ob andere STB 1 zu einem Account online sind, wenn ja wird überprüft, ob die DSLAM-Portnummer abweicht. Wenn ja, werden die ermittelten STBs des Accounts durch einen Remote-Reboot Befehl neu gestartet. Die daraus resultierenden Bootvorgänge haben das Resultat, dass die STBs den ursprünglichen Haushalten/Kunden (Phase l) zugeordnet werden. Daraus resultiert der Effekt, dass die STB wieder die ursprünglichen (reduzierten) Nutzungsmöglichkeiten erlangt. Im vorliegenden Falle die des Kunden A. Damit wurde eine Missbrauchsverhinderung präventiv realisiert. Es ist keine Ermittlung des Missbrauchs notwendig und somit keine Sanktionierung des Kunden erforderlich.

Zusätzlich ist für den Kunden B die Nutzung seiner IPTV-Berechtigungen zu keiner Zeit eingeschränkt.

## Patentansprüche

1. Verfahren zur Authentifizierung einer Set-Top-Box, mit einer Set-Top-Box (1), die durch ein lokales Netzwerk mit einem Internet Access Device (2) verbunden ist, wobei das Internet Access Device (2) über ein Netzelement (3) den Zugang zum Internet bereitstellt, wobei sich das Internet Access Device mit Hilfe eines Accounts authentifiziert, um einen Zugang zum Internet zu erlangen, mit einem Plattform Client Bootmanager (5), im Internet angeordnet ist, der für den Bootvorgang der Set-Top-Box zuständig ist und für die Authentifizierung der Set-Top-Box verantwortlich ist, und der auf der Basis des Accounts des Internet Access Devices auch die Authentifizierung der Set-Top-Box durchführt, **gekennzeichnet durch** die Schritte:
- Speichern einer eindeutigen Information in Form einer DSLAM-Portnummer mit dem Account, aus der die Identität der Set-Top-Box ersichtlich ist durch den Plattform Client Bootmanger;
- Überprüfen der Set-Top-Box anhand der Identität während des Bootvorgangs, ob mehrere Set-Top-Boxen den gleichen Account verwenden, und wenn dies der Fall ist, Überprüfen, ob die DSLAM-Portnummer identisch ist, falls das nicht der Fall ist, erneutes remotes Booten der Set-Top-Boxen durch den Plattform Client Bootmanager, die den gleichen Account verwenden, was die Funktion mit den alten Einstellungen verhindert.

2. Das Verfahren nach Anspruch 1, wobei der Plattform Client Bootmanager Account Informationen über ein Radius Protokoll von einem zentralen Server erlangt, und wobei von diesem Server ebenfalls eine DSLAM Portnummer erlangt wird, an dem das Internet Access Device angeschlossen ist.

3. System zur Authentifizierung einer Set-Top-Box, mit einem Plattform Client Bootmanager, der im Internet angeordnet ist, der für den Bootvorgang der Set-Top-Box zuständig ist (5) und der mit der Set-Top-Box über ein Netzwerk verbunden ist, wobei die Set-Top-Box (1) über ein lokales Netzwerk mit einem Internet Access Device (2) verbunden ist, wobei das Internet Access Device (2) über ein Netzelement (3) den Zugang zum Internet bereitstellt, wobei das Internet Access Device sich mit Hilfe eines Accounts authentifiziert, um einen Zugang zum Internet zu erlangen, und wobei der Account auch vom Plattform Client Bootmanager verwendet wird, um die Set-Top-Box (1) zu authentifizieren, **gekennzeichnet durch**
- Mittel zum Empfangen einer Authentifizierungsanfrage von der Set-Top-Box, die an Plattform Client Bootmanager gerichtet;
- Mittel zum Erlangen einer eindeutigen Identität der Set-Top-Box durch den Plattform Client Bootmanager in Form einer DSLAM-Portnummer;
- Speichereinheit zum Speichern mit dem Account der eindeutigen Information, aus der die Identität der Set-Top-Box ersichtlich ist;
- Mittel zum Überprüfen der Set-Top-Box anhand der Identität während des Betriebs, ob mehrere Set-Top-Boxen den gleichen Account verwenden, und wenn dies der Fall ist, Mittel zum Überprüfen, ob die DSLAM-Portnummer identisch ist, falls das nicht der Fall ist, erneutes remotes Booten der Set-Top-Boxen durch den Plattform Client Bootmanager, die den gleichen Account verwenden, was die Funktion mit den alten Einstellungen verhindert.

4. Das System nach Anspruch 3, **gekennzeichnet durch** Mittel um Account Informationen über ein Radius Protokoll von einem zentralen Server zu erlangen, und wobei von diesem Server ebenfalls eine DSLAM Portnummer erlangt wird, an dem das Internet Access Device angeschlossen ist.

## Claims

1. A method for authenticating a set-top box, comprising a set-top box (1) connected to an Internet Access Device (2) through a local network, said Internet Access Device (2) providing access to the Internet via a network element (3), said Internet Access Device authenticating itself by means of an account to obtain access to the Internet, with a platform client boot manager (5) arranged in the Internet, which is responsible for the booting process of the set-top box and is responsible for the authentication of the set-top box, and which also carries out the authentication of the set-top box on the basis of the account of the Internet Access Device, **characterized by** the steps:
- Saving unique information in the form of a DSLAM port number with the account, from the information the identity of the set-top box is visible through the platform client boot manager;
- Checking the set-top box by the identity during the boot process to see if multiple set-top boxes use the same account, and if this is the case, verifying if the DSLAM port number is identical, if not, rebooting the set-top boxes using the same account remotely from the client platform boot manager, which prevents the old settings from working.

2. The method according to claim 1, where the platform client boot manager account obtains information about a Radius protocol from a central server, and wherein the DSLAM port number is also obtained from the server to which the Internet Access Device is connected.

3. A system for authenticating a set-top box, comprising a platform client boot manager located in the Internet, which is responsible for booting the set-top box (5) and which is connected to the set-top box via a network, wherein the set-top box (1) is connected to an Internet access device (2) via a local network, said Internet Access Device (2) providing access to the Internet via a network element (3), said Internet Access Device authenticating itself by means of an account to obtain access to the Internet, and wherein said account is also used by the platform client boot manager to authenticate said set-top box (1),
**characterised by**
Means for receiving an authentication request from the set-top box addressed to the platform client boot manager;
Means for obtaining a unique identity of the set-top box by the platform client boot manager in the form of a DSLAM port number;
Storage unit for storing with the account a unique information which indicates the identity of the set-top box;
Means for verifying the set-top box on the basis of the identity during operation whether multiple set-top boxes use the same account, and if so, means for verifying that the DSLAM port number is identical, if not, rebooting the set-top boxes remotely by the client platform boot manager using the same account, preventing the operation with the old settings.

4. A system according to claim 3, **characterized by** means for obtaining account information via a radius protocol from a central server and also obtaining from this server a DSLAM port number to which the Internet Access Device is connected.

## Revendications

1. Un procédé d'authentification d'un boîtier décodeur, comprenant un décodeur (1) connecté à un dispositif d'accès à Internet (2) via un réseau local, ledit dispositif d'accès à Internet (2) fournissant un accès à Internet via un élément de réseau (3), ledit dispositif d'accès à Internet s'authentifiant lui-même au moyen d'un compte pour l'obtention d'un accès à Internet, avec un gestionnaire de démarrage de plateforme client (5) disposé dans le réseau Internet, lequel est responsable du procédé de démarrage du boîtier décodeur et responsable de l'authentification du boîtier décodeur, et qui réalise également l'authentification du boîtier décodeur sur la base du compte du dispositif d'accès à Internet, **caractérisé par** les étapes :
- le stockage d'une information unique sous la forme d'un numéro de port DSLAM avec le compte à partir duquel l'identité du boîtier décodeur est visible depuis le gestionnaire de démarrage de plateforme client;
- la vérification du boîtier décodeur par l'identité pendant le procédé de démarrage pour voir si de multiples boîtiers décodeur utilisent le même compte, et dans ce cas, la vérification du fait de savoir si le numéro de port DSLAM est identique, et dans le cas contraire, le redémarrage à distance des boîtiers décodeurs utilisant le même compte depuis le gestionnaire de démarrage de plateforme client, en empêchant le fonctionnement des anciens réglages.

2. Le procédé selon la revendication précédente, dans lequel le compte du gestionnaire de démarrage de plateforme client obtient une information concernant un protocole de rayon à partir d'un serveur central, et dans lequel le numéro de port DSLAM est également obtenu à partir de ce serveur et sur lequel le dispositif d'accès à Internet est connecté.

3. Un système pour l'authentification d'un boîtier décodeur, comprenant un gestionnaire de démarrage de plateforme client localisé sur le réseau Internet, qui est responsable pour démarrer le boîtier décodeur (5) et qui est connecté au boîtier décodeur via un réseau, dans lequel le boîtier décodeur (1) est connecté à un dispositif d'accès au réseau Internet (2) via un réseau local, ledit dispositif d'accès à Internet (2) fournissant un accès au réseau Internet via à un élément de réseau (3), ledit dispositif d'accès à Internet s'authentifiant lui-même au moyen d'un compte pour l'obtention d'un accès à Internet, et dans lequel ledit compte est également utilisé par le gestionnaire de démarrage de plateforme client pour l'authentification dudit boîtier décodeur (1),
**caractérisé par**
des moyens pour recevoir une requête d'authentification du boîtier décodeur adressée au gestionnaire de démarrage client de plateforme ;
des moyens pour l'obtention d'une identité unique du boîtier décodeur par le gestionnaire de démarrage client de plateforme sous la forme d'un numéro de port DSLAM ;
une unité de stockage pour le stockage du compte et de l'information unique indiquant l'identité du boîtier décodeur ;
des moyens pour vérifier le boîtier décodeur sur la base de l'identification durant le fonctionnement que plusieurs boîtiers décodeurs utilisent le même compte, et dans ce cas, des moyens de vérification pour vérifier que le numéro de port DSLMA est identique et, si cela n'est pas le cas, le redémarrage à distance des boîtiers décodeurs par le gestionnaire de démarrage client de plateforme en utilisant le même compte, en empêchant le fonctionnement avec les anciens réglages.

4. Un système selon la revendication 3, **caractérisé par** des moyens pour l'obtention d'une information de compte via un protocole de rayon depuis le serveur central et pour l'obtention également d'un numéro de port DSLAM de ce server auquel le dispositif d'accès à Internet est connecté.
